(19) Europäisches Patentamt
European Patent Office
Office européen des brevets

(11) **EP 2 133 454 B1**

(12) **EUROPEAN PATENT SPECIFICATION**

(45) Date of publication and mention
of the grant of the patent:
**24.04.2019 Bulletin 2019/17**

(51) Int Cl.:
***D04H 3/00*** *(2012.01)*    ***A47L 13/16*** *(2006.01)*
***D04H 3/10*** *(2012.01)*    ***D01D 5/08*** *(2006.01)*

(21) Application number: **08738845.0**

(22) Date of filing: **25.03.2008**

(86) International application number:
**PCT/JP2008/055600**

(87) International publication number:
**WO 2008/117805 (02.10.2008 Gazette 2008/40)**

(54) **MIXED CONTINUOUS FIBER NONWOVEN FABRIC AND PROCESS FOR MANUFACTURING THE SAME**

ENDLOSFASERMISCHVLIESSTOFF UND HERSTELLUNGSVERFAHREN DAFÜR

TISSU NON TISSÉ À FIBRES CONTINUES VARIÉES ET SON PROCÉDÉ DE FABRICATION

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **26.03.2007  JP 2007078526**

(43) Date of publication of application:
**16.12.2009  Bulletin 2009/51**

(73) Proprietor: **Mitsui Chemicals, Inc.
Tokyo 105-7117 (JP)**

(72) Inventors:
• **MATSUBARA, Akio
Sodegaura-shi
Chiba 299-0265 (JP)**

• **MOTOMURA, Shigeyuki
Sodegaura-shi
Chiba 299-0265 (JP)**

(74) Representative: **Hoffmann Eitle
Patent- und Rechtsanwälte PartmbB
Arabellastraße 30
81925 München (DE)**

(56) References cited:
**WO-A1-2006/001739    WO-A2-02/31250
JP-A- 05 125 645      JP-A- 05 263 344
JP-A- 08 302 553      JP-A- 10 237 753
JP-A- H05 186 954     JP-A- 2002 302 861
JP-A- 2004 169 249    JP-A- 2006 176 898
US-A- 5 935 883       US-A- 5 965 468
US-A1- 2002 168 912   US-A1- 2003 091 822**

**Description**

**TECHNICAL FIELD**

The present invention relates to a mixed continuous fiber non-woven fabric comprising a split continuous fiber and a crimped continuous fiber that are excellent in flexibility, feeling, and a lint-free property, and to a method for producing the mixed continuous fiber non-woven fabric.

**BACKGROUND ART**

A non-woven fabric made of an ultra fine fiber is excellent in flexibility and feeling, and is widely used as a material of clothing items, a disposable diaper, a sanitary article, and a wiping cloth.

As a method for obtaining an ultra fine fiber non-woven fabric, for instance, Japanese Examined Patent Application Publication No. 2-14458 (Patent document 1) discloses a method for carrying out a processing with a high pressure water flow for a fabric made of a multi-component filament comprising polymers having different water swelling properties or a plurality of immiscible polymer components. Moreover, Japanese Examined Patent Application Publication No. 7-49619 (Patent document 2) discloses a method for obtaining a confounding non-woven fabric by using a fiber forming low melting point polymer and an immiscible fiber forming high melting point polymer that have a difference in a melting point in the range of 30 to 180°C as a thermoplastic resin. Furthermore, International Publication WO2005/042824 (Patent document 3) discloses a method for preparing a non-woven fabric by depositing a splittable conjugated fiber type continuous fiber, to which a prescribed fineness has been imparted by discharging and stretching different two kinds of resins from a spinneret provided with a composite spinning nozzle, on a collection belt, and for preparing an ultra fine fiber non-woven fabric having a fineness in the range of 0.01 to 2.0 deniers by further applying a load for stretching. As described above, non-woven fabrics that are prepared by a variety of methods have been proposed.

However, the methods that are disclosed in Patent document 1 and Patent document 2 require a large amount of energy to split a fiber, and may cause the fiber to adhere to the face of a nozzle unfortunately. In addition, a thread breakage due to non-uniformity of a temperature in a nozzle may cause a great reduction in a productivity of a non-woven fabric disadvantageously.

In Patent document 3, the example thereof discloses a split fiber non-woven fabric that is split by a gear stretching process. However, a lint-free property, bulkiness, and flexibility are insufficient as used to be. Consequently, from the view of using for an application such as clothing items and a wiping cloth, a non-woven fabric in which a lint-free property, bulkiness, and flexibility are improved is much in demand as used to be.

On the other hand, Japanese Patent Laid-Open Publication No. 2004-330007 (Patent document 4) proposes a method for producing an air filter material made of a non-woven fabric that is prepared by carrying out a water flow confounding treatment to a fiber web in which a splittable conjugated fiber in the range of 30 to 80 mass% and a non-splittable conjugated fiber in the range of 70 to 20 mass% are uniformly mixed. However, the non-woven fabric that is specifically disclosed in Patent document 4 is a non-woven fabric made of a staple fiber in the range of 10 to 100 mm, and fibers occasionally drop out disadvantageously.

Moreover, Japanese Patent No. 3113124 (Patent document 5) proposes a method for producing an ultra fine fiber web by a split fibrillating with a physical shock after a splittable conjugated fiber is carded. More specifically, Patent document 5 discloses a production method for imparting a bias of a compositional distribution to a fiber cross section of the splittable conjugated fiber and displaying a steric crimp of 25 pieces/25 mm or larger by carrying out a relaxation thermal treatment without imparting a mechanical crimp after stretching. However, the non-woven fabric that is specifically disclosed in Patent document 5 is a non-woven fabric that is constituted by an ultra fine fiber of 0.5 deniers or less, and fibers also occasionally drop out disadvantageously.

US 2002/0168912 relates to environmentally degradable multicomponent fibers and nonwoven webs and disposable articles comprising the fibers, wherein each component of the fiber comprises destructurized starch and/or a biodegradable thermoplastic polymer and the nonwoven webs may further contain other synthetic or natural fibers that are blended with the multicomponent fibers.

WO 2006/001739 relates to a hydroentangled integrated composite nonwoven material comprising a mixture of randomized continuous filaments, splittable shortcut staple fibres, and optional non-splittable staple fibres and a process for preparing a hydroentangled integrated composite nonwoven material.

US 5 965 468 describes a nonwoven fabric which is made from directly formed, mixed size fibers which may be conjugate fibers and may be crimped.

WO 02/31250 A2 relates to nonwoven webs of continuous filaments having a mixture or blend of first and second continuous filaments wherein the first and second continuous filaments are different from the first continuous filaments in one or more respects such as size, cross-sectional shape, polymer composition, crimp level, wettability, liquid repellency, and charge retention. The second continuous filaments can be substantially surrounded by the first continuous filaments wherein the ratio of first continuous filaments to second continuous filaments exceeds about 2:1.

US 2003/091822 A1 relates to splittable multicomponent fibers, to split fibers made from such splittable fibers, to a processes for making such splittable and split fibers, and to nonwovens and other substrates made form the split fibers. The splittable multicomponent fibers can comprise one component comprising thermoplastic starch and another component comprising a non-starch thermoplastic polymer. wherein: (i) said second component is capable of being split or removed from said first component to provide at least one split fiber consisting essentially of said first component; and (ii) wherein the split fiber of said first component can have good elongation properties. The splittable multicomponent fibers can also provide split fibers of the thermoplastic starch component.

JP 2002 302861 A relates to a raised nonwoven fabric that is made of continuous filament yarn of a thermoplastic resin wherein one face of the nonwoven fabric is partially or wholly thermocompressed whereby the filaments are mutually bonded to form the thermocompressed face, while the fibers on the other face are raised by peeling off the fiber from the fiber-bonded part of the nonwoven fabric layer, looping the continuous filaments or fibrillating and braking the looped continuous filaments, as well as a method of producing the raised nonwoven fabric.

As described above, at present there is not known a non-woven fabric that is suitable for an application such as clothing items and a wiping cloth, that is, a non-woven fabric excellent in a lint-free property, bulkiness, and flexibility in a balanced manner.

Patent document 1: Japanese Examined Patent Application Publication No. 2-14458

Patent document 2: Japanese Examined Patent Application Publication No. 7-49619

Patent document 3: International Publication WO2005/042824

Patent document 4: Japanese Patent Laid-Open Publication No. 2004-330007

Patent document 5: Japanese Patent No. 3113124

## DISCLOSURE OF THE INVENTION

## PROBLEMS TO BE SOLVED BY THE INVENTION

An object of the present invention is to provide a non-woven fabric that is excellent in bulkiness, flexibility, and feeling, in which less fibers drop out even in the case wherein the non-woven fabric is used for an application such as clothing items and a wiping cloth in which a surface of a non-woven fabric is rubbed, that is, excellent in a lint-free property.

## MEANS FOR SOLVING THE PROBLEMS

The present inventors have carried out a variety of studies. As a result, the present inventors have found that the above object can be achieved by preparing a non-woven fabric made of a splittable conjugated continuous fiber and a crimped continuous fiber, and completed the present invention.

In other words, the present invention provides a mixed continuous fiber non-woven fabric comprising a splittable conjugated continuous fiber and a crimped continuous fiber, preferably in which a total amount of a crimped continuous fiber is in the range of 10 to 90% by weight (where a total weight of a splittable conjugated continuous fiber and a crimped continuous fiber is 100% by weight), a method for producing the same and an application thereof.

## EFFECT OF THE INVENTION

A mixed continuous fiber non-woven fabric in accordance with the present invention comprises a split continuous fiber and a crimped continuous fiber. Consequently, the mixed continuous fiber non-woven fabric is excellent in bulkiness, flexibility, and feeling. In addition, since any of the split continuous fiber and the crimped continuous fiber is a continuous fiber, fibers that drop out from the mixed continuous fiber non-woven fabric are extremely lowered.

Therefore, a wiping cloth comprising the above mixed continuous fiber non-woven fabric and a non-woven fabric laminate comprising at least one layer of the above mixed continuous fiber non-woven fabric are excellent in not only bulkiness, flexibility, and feeling, but also a lint-free property, thereby having an excellent wiping property.

Moreover, by a producing method in accordance with the present invention, the above mixed continuous fiber non-woven fabric can be produced with an improved productivity.

## BRIEF DESCRIPTION OF THE DRAWINGS

Fig. 1 is a schematic view showing an example of a cross section of a splittable conjugated continuous fiber in accordance with the present invention. Four modes (a) to (d) are illustrated as examples of cross sectional modes before a split treatment is carried out. A mode (e) is an example of a cross sectional mode after a split treatment is carried out to the mode (a). In the figure, a white part and a black part indicate resins to be combined, respectively.

Fig. 2 is a schematic view showing an example of a cross section of a crimped conjugated continuous fiber in accordance with the present invention. Three modes (a) to (c) are illustrated as examples. In the figure, a white part and a black part indicate resins to be combined, respectively.

Fig. 3 is a diagrammatic view of a spunbonding apparatus that is used in the examples and comparative examples of the present invention.

Fig. 4 is a conceptual view showing a nozzle pitch of a spinneret that is used in the examples of the present invention. In the figure, a white part and a black part indicate different shapes of discharge holes, respectively.

EXPLANATION OF THE CODE

| 1: | Extruder |
| 2: | Spinneret |
| 3: | Spinning fiber |
| 4: | Air for cooling a fiber (quench air) |
| 5: | Ejector for drawing a fiber |
| 6: | Collector |
| 7: | Suction unit |
| 8: | Non-woven fabric (web) |
| 9: | Bonding unit |
| 10: | Winder |

## BEST MODE FOR CARRYING OUT THE INVENTION

Splittable conjugated continuous fiber

A splittable conjugated continuous fiber in accordance with the present invention is a conjugated continuous fiber in which a part made of a resin (A) and a part made of a resin (B) are in contact with each other, and the resin (A) and the resin (B) have a property for being split.

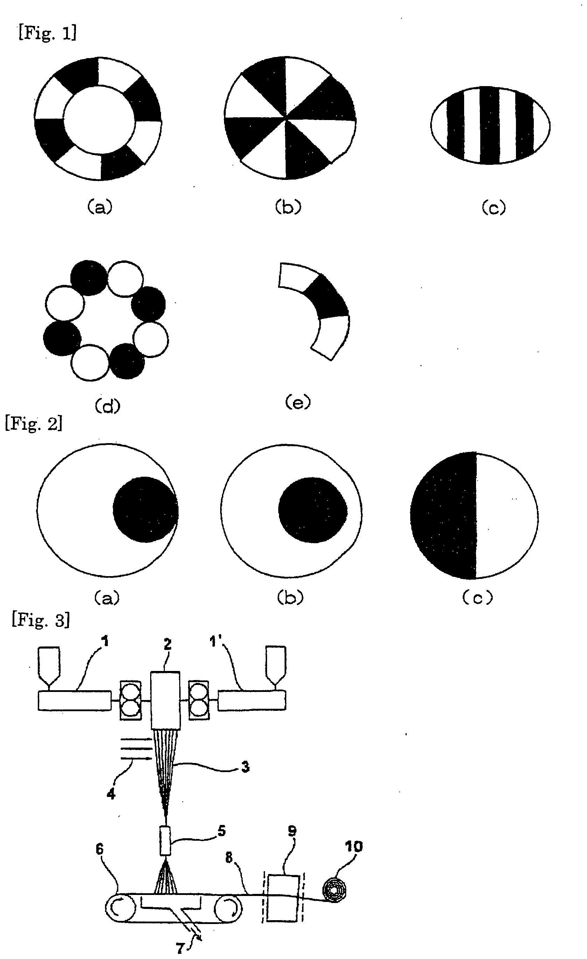

A shape (cross section) of a conjugated continuous fiber is not restricted in particular providing the resin (A) part and the resin (B) part are in contact with each other. However, it is preferable in particular that the resin (A) and the resin (B) have a property for easily being split as shown in Figs. 1(a) to 1(d).

Split continuous fiber

A split continuous fiber that is one of components constituting a mixed continuous fiber non-woven fabric in accordance with the present invention is a continuous fiber in which a splittable conjugated continuous fiber composed of at least two components is split to a plurality of fibers by a physical treatment such as a high pressure water flow.

The split continuous fiber in accordance with the present invention is constituted by at least two kinds of split continuous fibers. A fineness of the split continuous fiber in accordance with the present invention is usually in the range of 0.001 to 2.0 deniers, preferably in the range of 0.001 to 1.2 deniers.

A component that constitutes a split continuous fiber in accordance with the present invention is not restricted in particular. As the component, many kinds of publicly known thermoplastic resins can be mentioned for instance olefin polymer; an ethylene based polymer such as a homopolymer of ethylene, and high-pressure low density polyethylene, linear low density polyethylene (so-called LLDPE), medium density polyethylene, and high density polyethylene, which are known as a copolymer of ethylene and $\alpha$-olefin of at least one kind represented by propylene, 1-butene, 1-hexene, 4-methyl-1-pentene, and 1-octene;

a propylene based polymer such as a homopolymer of propylene (polypropylene), and a propylene-ethylene random copolymer, a propylene·ethylene·1-butene random copolymer, and a propylene· 1-butene random copolymer (so-called a propylene random copolymer), which are known as a copolymer of propylene and α-olefin of at least one kind represented by ethylene, 1-butene, 1-hexene, 4-methyl--pentene, and 1-octene; 1-butene based polymer such as poly-1-butene, a 1-butene·ethylene random copolymer, and a 1-butene·propylene random copolymer;

a 4-methyl-1-pentene based polymer such as poly-4-methyl-1-pentene, a 4-methyl-1-pentene·1-decene random copolymer, and a copolymer of 4-methyl-1-pentene and α-olefin of at least one kind having carbon numbers in the range of 12 to 20; and an ethylene·acid (derivative) copolymer such as an ethylene ·vinyl acetate copolymer (EVA), an ethylene·(meta) acrylic acid copolymer, an ethylene·(meta) acrylic acid ester copolymer, and ionomer, and crystalline polystyrene such as an ethylene·styrene copolymer and isotactic polystyrene:

polyester; such as aromatic polyester such as polyethylene terephthalate, polytrimethylene terephthalate, polybutylene terephthalate, polyethylene terephthalate·isophthalate copolymer, polyethylene naphthalate, and poly-1,4-cyclohexylene dimethylene terephthalate, and aliphatic polyether such as poly-3-hydroxybutyrate, poly-3-hydroxyvalerate, polycaprolactone, polyethylene succinate, polybutylene succinate, polylactic acid, polyglycolic acid, and a copolymer thereof: polyamide such as nylon-6, nylon-11, nylon-12, nylon-66, nylon-610, nylon-6T, nylon-6I, and nylon-9T:

a thermoplastic elastomer; such as a styrene based elastomer that is represented by a block copolymer composed of a polymer block made of at least one aromatic vinyl compound such as styrene and a polymer block made of at least one conjugated diene compound such as butadiene and isoprene, or its hydrogenated product as represented by a polystyrene-polybutadiene-polystyrene block copolymer (referred to as SBS), a polystyrene-polyisoprene-polystyrene block copolymer (referred to as SIS), and a polystyrene-polyethylene·butylene-polystyrene block copolymer (referred to as SEBS) or a polystyrene-polyethylene·propylene-polystyrene block copolymer (referred to as SEPS) that is a hydrogenated product thereof; a polyester based elastomer that is represented by a block copolymer made of high crystalline aromatic polyester and noncrystalline aliphatic polyether; a polyamide based elastomer that is represented by a block copolymer made of crystalline polyamide having a high melting point and noncrystalline polyether or polyester having a low glass transition temperature (Tg); a thermoplastic polyurethane based elastomer that is represented by a block copolymer in which a hard segment is made of polyurethane and a soft segment is made of polycarbonate based polyol, ether based polyol, caprolactone based polyester, or adipate based polyester; a polyolefin based elastomer that is obtained by singly using a noncrystalline or low crystalline ethylene·α-olefin random copolymer, a noncrystalline or low crystalline propylene ·α-olefin random copolymer, or a noncrystalline or low crystalline propylene·ethylene·α-olefin random copolymer, by mixing the noncrystalline or low crystalline random copolymer and a propylene homopolymer, or by mixing the noncrystalline or low crystalline random copolymer and crystalline polyolefin such as a copolymer of propylene and a small amount of α-olefin, high density polyethylene, and medium density polyethylene; a polyvinyl chloride based elastomer; and a fluorine based elastomer: and polyvinyl chloride, polyimide, polyacrylonitrile, polycarbonate, polystyrene, ionomer, and a mixture of at least two kinds thereof.

Providing the above thermoplastic resin is provided with a fiber forming property by melt spinning, a melt viscosity of the thermoplastic resin is not restricted in particular.

An additive such as an anti-oxidizing agent, a weathering stabilizer, a light resistant stabilizer, an antistatic agent, an anti-fogging agent, an anti-blocking agent, a lubricant, a nucleating agent, and a pigment, which are usually used, or other polymers, can be compounded to the thermoplastic resin as needed without departing from the scope of the present invention.

For a thermoplastic resin, it is necessary to select thermoplastic resins that are incompatible with each other as needed in such a manner that a splittable conjugated continuous fiber that constitutes a split continuous fiber can be split to a plurality of fibers by a physical treatment such as a high pressure water flow.

As a constitution of a splittable conjugated continuous fiber, there can be mentioned for instance an ethylene based polymer / a propylene based polymer, an olefin polymer / polyester, an olefin polymer / polyamide, polyester / polyamide, and a thermoplastic elastomer / an olefin polymer.

Among them, a combination of an olefin polymer / polyester is preferable. As the combination of an olefin polymer / polyester, it is preferable to combine a propylene based polymer, in particular an α-olefin random copolymer, as an olefin polymer and aliphatic polyether, in particular polylactic acid, as polyester. In the case in which a splittable conjugated continuous fiber is constituted by such a combination, the splittable conjugated continuous fiber can be easily split, and energy that is required for a split, such as a pressure of a water jet, can be reduced. Consequently, a damage that is applied to a non-woven fabric can be reduced, and fibers that drop out from the mixed continuous fiber non-woven fabric including a split continuous fiber can be extremely lowered.

In the case in which a difference in melting points of resins that constitute the splittable conjugated continuous fiber is large, a low molecular weight component of a polymer on a low melting point side is gasified and adheres to a face of a nozzle in forming in some cases. In addition, a thread breakage caused by non-uniformity of a temperature in a nozzle may cause a great reduction in productivity disadvantageously.

Accordingly, for the combination of an olefin polymer / polyester, it is particularly preferable to select polyester and an olefin polymer in such a manner that a difference in melting points thereof is less than 30°C, preferably 25°C or less. A splittable conjugated continuous fiber that is constituted by the above combination does not cause an adhesion to a face of a nozzle and a thread breakage in a nozzle to occur. In addition, since the splittable conjugated continuous fiber can be more easily split, an oriented crystallization of polyester is promoted and strength of polyester is highly improved. Consequently, split continuous fibers that drop out can be preferably lowered.

Crimped continuous fiber

A crimped continuous fiber that is one of other components constituting a mixed continuous fiber non-woven fabric in accordance with the present invention is a fiber in which a continuous fiber is crimped. For a crimped fiber, it is preferable that the number of crimps is at least 15/25 mm. For the crimped continuous fiber in the above range, it is preferable that the number of crimps is at least 20/25 mm, particularly in the range of 20 to 40/25 mm, from the view of high strength and bulkiness.

For the crimped continuous fiber in accordance with the present invention, it is preferable that a fineness of the crimped continuous fiber is usually in the range of 0.5 to 5.0 deniers, preferably in the range of 1.0 to 3.0 deniers, and the crimped continuous fiber does not have a split property, from the view of improving a lint-free property.

Providing a crimped continuous fiber in accordance with the present invention is provided with a crimp, the crimped continuous fiber can be made of a single thermoplastic resin. A structure (shape) of the crimped continuous fiber is not restricted in particular, and a variety of structures can be adopted. For instance, the crimped continuous fiber can have a shape such as a circle, a rectangular, a star, an odd-shaped cross section, or an eccentric core-in-sheath, and a parallel type that have a conjugated structure made of thermoplastic resins of at least two components.

Among them, an eccentric core-in-sheath crimped continuous fiber and a parallel type crimped continuous fiber that have a conjugated structure made of thermoplastic resins of at least two components such as an eccentric core-in-sheath and a parallel type are preferable from the view of an excellent crimp property and an enabled stable spinning.

A component that constitutes a crimped continuous fiber in accordance with the present invention is not restricted in particular. As the component, many kinds of publicly known thermoplastic resins that constitute the split continuous fiber can also be used.

In the case in which an eccentric core-in-sheath crimped continuous fiber or a parallel type crimped continuous fiber is used as a crimped continuous fiber, it is preferable to use a combination of thermoplastic resins of different kinds with different degrees of crystallinity and different shrink properties since a difference in degrees of crystallinity and a difference in shrink properties can be more effectively utilized and therefore a crimped continuous fiber excellent in a crimp property can be prepared. As such a combination, there can be mentioned for instance a propylene based polymer / a propylene ·ethylene random copolymer, an ethylene based polymer / a propylene based polymer, an olefin polymer / polyester, an olefin polymer / polyamide, and a thermoplastic elastomer / an olefin polymer.

Mixed continuous fiber non-woven fabric

A mixed continuous fiber non-woven fabric in accordance with the present invention is a mixed continuous fiber non-woven fabric comprising the split continuous fiber and the crimped continuous fiber in a substantially uniform monolayer, preferably the crimped continuous fiber in the range of 10 to 90% by weight, preferably in the range of 40 to 80% by weight (where a total weight of a split continuous fiber and a crimped continuous fiber is 100% by weight).

The mixed continuous fiber non-woven fabric in accordance with the present invention comprises the split continuous fibers of at least two kinds and the crimped continuous fibers. Consequently, as compared with a mixed continuous fiber non-woven fabric comprising split continuous fibers of at least two kinds and non-crimped continuous fibers for instance, the mixed continuous fiber non-woven fabric in accordance with the present invention is excellent in bulkiness, flexibility, and feeling, and fibers that drop out from the mixed continuous fiber non-woven fabric are extremely lowered.

For the mixed continuous fiber non-woven fabric in accordance with the present invention, a weight (a mass per unit area) is usually in the range of 3 to 200 $g/m^2$, preferably in the range of 10 to 150 $g/m^2$.

The mixed continuous fiber non-woven fabric in accordance with the present invention is excellent in a lint-free property. More specifically, an amount of fibers that drop out is 0.1 $mg/m^2$ or less on the both faces of the non-woven fabric in an evaluation of a lint-free property described in the example.

The mixed continuous fiber non-woven fabric in accordance with the present invention can be confounded by many kinds of publicly known confounding methods for various applications. As such a confounding method, there can be mentioned for instance a method for using a means such as a needle punch, a water jet, and ultrasonic waves, a hot embossing method using an embossing roll, and a method of a partial thermal fusion bonding using a hot air through.

A confounding method can be used singly, or a plurality of confounding methods can also be combined to be used.

In the case in which a thermal fusion bonding is carried out by a hot embossing method, an emboss area ratio is usually in the range of 5 to 20%, preferably 5 to 10%, and a non-emboss unit area is at least 0.5 mm$^2$, preferably in the range of 4 to 40 mm$^2$. A non-emboss unit area is a maximum area of a quadrangle that touches the emboss internally in a non-emboss part of a minimum unit enclosed on all four sides by an emboss part.

In the case in which the mixed continuous fiber non-woven fabric in accordance with the present invention is provided with the emboss in the above range, the mixed continuous fiber non-woven fabric shows an excellent lint-free property without reducing flexibility or bulkiness, and therefore is preferably excellent in flexibility, bulkiness, and a lint-free property in a balanced manner.

Production method of the mixed continuous fiber non-woven fabric

The mixed continuous fiber non-woven fabric in accordance with the present invention can be produced by using a die provided with a nozzle hole for forming a splittable conjugated continuous fiber by which a plurality of split continuous fibers can be obtained and a plurality of nozzle holes for forming a crimped continuous fiber in the same spinning die. More specifically, after a continuous fiber non-woven fabric in which a splittable conjugated continuous fiber that are made of the thermoplastic resins of at least two kinds and a crimped continuous fiber that does not have a split property are mixed (a mixed fiber) by using the die based on a spunbonding method, a high pressure liquid flow is applied to the continuous fiber non-woven fabric, and the splittable conjugated continuous fiber is split to split continuous fibers of at least two kinds for a production. The mixed continuous fiber non-woven fabric that is obtained by the above production method is excellent in a lint-free property since a split continuous fiber can be satisfactorily confounded in the case in which a split continuous fiber and a crimped continuous fiber that does not have a split property are uniformly mixed. In addition, since a crimped continuous fiber is provided with a formed crimp, the mixed continuous fiber non-woven fabric is preferably excellent in flexibility and bulkiness.

The mixed continuous fiber non-woven fabric in accordance with the present invention can be produced by using a variety of production methods. As such production methods, the following methods can be mentioned for instance: A splittable conjugated continuous fiber non-woven fabric made of the thermoplastic resins of at least two kinds is produced by using a die provided with a nozzle hole for forming a splittable conjugated continuous fiber by which a plurality of split continuous fibers can be obtained according to a spunbonding method. On the other hand, a non-woven fabric of a crimped continuous fiber that does not have a split property is produced by using a die provided with a plurality of nozzle holes for forming a crimped continuous fiber according to a spunbonding method to prepare each continuous fiber non-woven fabric. The splittable conjugated continuous fiber non-woven fabric and non-woven fabric of a crimped continuous fiber that does not have a split property are then laminated to each other, a high pressure liquid flow is applied to the laminate to split the splittable conjugated continuous fiber, and the split continuous fiber and the crimped continuous fiber that does not have a split property are mixed. As a result, the mixed continuous fiber non-woven fabric can be produced.

A continuous fiber non-woven fabric made of a splittable conjugated continuous fiber is obtained by the thermoplastic resins of at least two kinds by using a die provided with a nozzle for forming a splittable conjugated continuous fiber by which a plurality of split continuous fibers can be obtained according to a spunbonding method beforehand. A high pressure liquid flow is then applied to the continuous fiber non-woven fabric made of a splittable conjugated continuous fiber, and the splittable conjugated continuous fiber is split to produce a split continuous fiber non-woven fabric. The split continuous fiber non-woven fabric and a continuous fiber non-woven fabric made of a crimped continuous fiber that does not have a split property and is produced by using a die provided with a plurality of nozzle holes for forming a crimped continuous fiber according to a spunbonding method are then laminated to each other. A high pressure liquid flow is then applied to the laminate, and the split continuous fiber and the crimped continuous fiber that does not have a split property are mixed. As a result, the mixed continuous fiber non-woven fabric can be produced.

A splittable conjugated continuous fiber and a crimped continuous fiber that does not have a split property are discharged from a spinning die provided with a spinning nozzle for a mixed fiber. The mixed continuous fiber comprising the splittable conjugated continuous fiber and the crimped continuous fiber that does not have a split property to which a spinning has been carried out is then cooled by a cooling fluid. A tension is applied to the mixed continuous fiber by a fluid to thin the mixed continuous fiber, and the mixed continuous fibers are collected and deposited on a collection belt. As a result, the mixed continuous fiber non-woven fabric can be produced.

In the case in which a high pressure liquid flow is applied to the laminate to mix a splittable conjugated continuous fiber or a split continuous fiber and a crimped continuous fiber that does not have a split property it is preferable to substitute an air that exists between single fibers constituting the non-woven fabric laminate by water to promote confounding for instance before a process of a fiber split by a high pressure liquid flow and an apply of confounding. More specifically, water is applied to a web.

A high pressure liquid flow can be obtained by passing liquid through a nozzle hole, and by pressurizing and injecting the liquid by a high pressure pump. A diameter of a nozzle hole is usually in the range of 0.05 to 1.0 mm, preferably in the range of 0.1 to 0.5 mm. A pressure of a high pressure liquid flow is usually in the range of 5 to 400 MPa, preferably in the range of 50 to 300 MPa. As liquid, water or hot water is used to be easily handled. A specific resistance value thereof is preferably at least 10 MΩ· cm in the case in which the value is measured by a publicly known water quality measuring apparatus. Moreover, it is preferable to use pure water of at least 15 MΩ·cm.

A distance between a nozzle hole and a non-woven fabric laminate is preferably in the range of 1 to 15 cm. In the case in which the distance exceeds 15 cm, an energy that is applied to the non-woven fabric from liquid is reduced, and an effect of a fiber split or a confounding is more likely to be reduced. On the other hand, in the case in which the distance is less than 1 cm, a texture of a mixed continuous fiber non-woven fabric that is obtained is more likely to be deteriorated.

In a general way, the nozzle holes of a high pressure liquid flow are arranged in lines shape in a direction perpendicular to a direction of movement of a non-woven fabric laminate. In the case of one-surface processing, it is preferable to arrange injection holes on at least two lines, more preferably at least three lines to obtain a uniform fiber split or a tight confounding linkage. Moreover, it is preferable that a pressure of a high pressure liquid flow is lower on the former stage side and higher on the latter stage side for a uniform texture formation.

For a mixed continuous fiber non-woven fabric that is prepared by a fiber split processing or a mixture by a high pressure liquid flow, after an excess water content is removed by mechanical squeezing, the mixed continuous fiber non-woven fabric is dried and heat-treated. A thermal treatment temperature and a thermal treatment time can also be selected in such a manner that a suitable shrink and an acceleration of crystallization can be allowed not only for a removal of a water content. A thermal treatment method can be based on a dry heat treatment or a wet heat treatment.

Production method of a splittable conjugated continuous fiber non-woven fabric and a split continuous fiber non-woven fabric

A splittable conjugated continuous fiber non-woven fabric or a split continuous fiber non-woven fabric, which is used in the case in which a mixed continuous fiber non-woven fabric in accordance with the present invention is produced, can be produced by the following production method for instance.

As an example of a method for producing a splittable conjugated continuous fiber non-woven fabric or a split continuous fiber non-woven fabric in accordance with the present invention, a spunbonding method will be described in the following. The thermoplastic resins of at least two kinds are individually molten by an extruder or the like. Each of the molten materials is discharged from a spinneret provided with a composite spinning nozzle with radial or parallel cross sectional structure formed as shown in Figs. 1(a) to 1(d) to carry out a continuous fiber of a splittable conjugated continuous fiber.

The splittable conjugated continuous fiber to which a continuous fiber has been carried out is then cooled by a cooling fluid such as an air. A tension is then applied to the continuous fiber by a fluid such as a stretching air to thin the continuous fiber to be a prescribed fineness, and the continuous fibers are collected and deposited on a collection belt to be a prescribed thickness. The cooling fluid and the fluid for applying a tension to the continuous fiber to thin the continuous fiber can be the same or different from each other. A hot embossing process by a thermal fusion using an embossing roll or the like is then carried out as needed. In the case in which a thermal fusion bonding is carried out by a hot embossing roll, an emboss area ratio of an embossing roll can be determined appropriately. It is preferable that an emboss area ratio is usually in the range of 5 to 30%.

In the case in which a high pressure water flow such as a water jet is applied to the deposited splittable conjugated continuous fiber non-woven fabric to prepare a split continuous fiber non-woven fabric, a method equivalent to that described in the item of the production method of the mixed continuous fiber non-woven fabric can be used.

Production method of a crimped continuous fiber non-woven fabric

A crimped continuous fiber non-woven fabric, which is used in the case in which a mixed continuous fiber non-woven fabric in accordance with the present invention is produced, can be produced by the following production method for instance.

As an example of a method for producing a crimped continuous fiber non-woven fabric in accordance with the present invention, a spunbonding method will be described in the following. As an example of such a method, the thermoplastic resin of one kind or at least two kinds is molten and extruded by an extruder to obtain a fiber. A crimp is imparted to the obtained fiber by a publicly known means such as by applying a mechanical stress to prepare a crimped continuous fiber non-woven fabric. As another example, there can be mentioned for instance a crimped continuous fiber in which a crimp is imparted by changing a cooling temperature of a side face of a fiber to which melt spinning is carried out, and a crimped continuous fiber in which a crimp is imparted by carrying out the melt spinning of an odd-shaped cross section fiber and by controlling a distribution of a degree of crystallinity caused by an anisotropy in cooling or an asymmetry of a cross sectional shape. As another example of such a method, a crimped continuous fiber non-woven fabric is prepared by depositing a crimped continuous fiber made of an eccentric core-in-sheath crimped continuous fiber or a parallel type crimped continuous fiber made of thermoplastic resins of at least two kinds that have different crystallization temperatures, melting points, softening temperatures, melt viscosities or the like.

Wiping cloth

A wiping cloth in accordance with the present invention is provided with the mixed continuous fiber non-woven fabric on a wiping surface. By using the mixed continuous fiber non-woven fabric for a wiping surface of a wiping cloth, a wiping cloth in which an occurrence of lint is lowered and a wiping property is excellent can be obtained. Moreover, without departing from the scope of the present invention, a resin or another non-woven fabric can also be contained, and a raising processing, an embossing processing, a coloring processing, a calendering processing, and a punching processing can also be carried out to the wiping cloth. For instance, it is possible to carrying out a lamination or a confounding using a water jet process with a continuous fiber non-woven fabric or a staple fiber non-woven fabric made of polyvinyl alcohol, a pulp, a rayon, a cotton, a regenerated cellulose, and other cellulose based fibers etc., having a water absorbing property, in such a manner that a water absorbing property is imparted. Moreover, it is also possible to add an agent such as an activator, a softening agent, and oil, and a deodorant, an anti-fungus agent, and an anti-mold agent for strengthening a cleaning effect and a sanitization as needed.

Non-woven fabric laminate

A non-woven fabric laminate in accordance with the present invention comprises at least one layer of the mixed continuous fiber non-woven fabric. The non-woven fabric laminate can be a laminate with other non-woven fabrics such as a spunbonded non-woven fabric and a melt blown non-woven fabric, a laminate with a film such as a porous film, and a laminate with a woven fabric or a textile fabric. A combination of laminates can be selected appropriately depending on its purpose. For instance, a laminate of a spunbonded non-woven fabric having a comparatively large fiber diameter and a mixed continuous fiber non-woven fabric is a preferable mode in an application for wiping a dust having a large particle diameter and a dust having a small particle diameter at the same moment. For a bonding of a mixed continuous fiber non-woven fabric and a non-woven fabric that has been produced by other production methods, a bonding of each layer is enabled by a publicly known method. As an example of the method, a confounding process using a means such as a needle punch, a water jet, and ultrasonic sealing, a thermal fusion process by using a hot embossing roll, and an adhesive bonding can be mentioned for instance.

**EXAMPLES**

The present invention will be described below in detail based on examples. However, the present invention is not restricted to the examples.

The evaluation of a measurement of a split rate, fineness, a bending resistance, a tensile strength, a lint-free property, and bulkiness for a non-woven fabric that was obtained in the examples was carried out by the following method.

(1) Split rate of a split continuous fiber

A non-woven fabric that has been obtained is embedded in an epoxy resin, and cut by a microtome to obtain a sample piece. The sample piece is observed by an electron microscope (the scanning electron microscope S-3500N manufactured by Hitachi, Ltd.). In the case in which the number of segments of a split continuous fiber cross section that is observed from a cross sectional image is one, a split rate is set to 100%. In the case in which the number of segments of a split continuous fiber cross section that is observed is two or larger, a split rate is calculated by the following expression. Fifty fibers are observed, and an average value thereof is set to a split rate of the split fiber non-woven fabric.

```
Split rate [%] = (The number of total segments - The number

of segments of a split fiber cross section that has been observed)

/ The number of total segments × 100
```

Here, the number of total segments is a total sum of segments that forms a filament cross section of a splittable conjugated continuous fiber. For instance, the number of total segments is 8 in the case of a splittable conjugated continuous fiber provided with a filament cross section as shown in Figs. 1(a), 1(b), and 1(d), and the number of total segments is 7 in the case of a splittable conjugated continuous fiber provided with a filament cross section as shown in Fig. 1(c).

For instance, in the case in which a split fiber cross section as shown in Fig. 1(e) is observed in a filament as shown in Fig. 1(a) wherein the number of total segments is 8, the number of segments of a split fiber cross section that is observed is 3, and a split rate is 62.5% according to the above expression.

(2) Fineness of a split continuous fiber

A split continuous fiber non-woven fabric that has been obtained is embedded in an epoxy resin, and cut by a microtome to obtain a sample piece. The sample piece is observed by an electron microscope (the scanning electron microscope S-3500N manufactured by Hitachi, Ltd.). Thirty non-split filaments are selected from a cross sectional image that has been obtained, and a cross sectional area thereof is calculated. A fineness of the non-split filaments is obtained from an average value thereof, and a fineness of a split continuous fiber is calculated using a split rate based on the following expression.

```
Fineness of a split continuous fiber = Fineness of the
non-split filaments / (The number of total segments × Split rate
/ 100)
```

(3) Bending resistance (45° cantilever method)

Five test pieces of width 20 mm × 150 mm are sampled in a machine direction (MD) and in a crosswise direction (CD), respectively, in a thermostatic chamber of a temperature of $20\pm2°C$ and a humidity of $65\pm2\%$ conforming to JIS Z 8703 (a standard state of a test place) according to JIS L1096 (6. 19. 1 A method, article), and are placed on a horizontal table having an inclined plane of 45° with surfaces smoothened in such a manner that a short side of a test piece is aligned to a base line of a scale. The test piece is then manually moved gradually in a direction of an inclined plane. In the case in which a center point of one end of the test piece comes into contact with the inclined plane, a moving length of a position of the other end is read by a scale. The bending resistance is indicated by a length (mm) of a movement of the test piece. The both surfaces of the five test pieces are measured, and an average value is calculated in a machine direction (MD) and in a crosswise direction (CD), respectively.

In the case in which the bending resistance is 50 mm or less in a machine direction (MD) and in a crosswise direction (CD), respectively, it is judged that flexibility is excellent. However, the bending resistance is not restricted to the value depending on a purpose of use.

(4) Tensile strength

In a thermostatic chamber of a temperature of $20\pm2°C$ and a humidity of $65\pm2\%$ conforming to JIS Z 8703 (a standard state of a test place) according to JIS L1906 (6. 12. 1 A method), three non-woven fabric test pieces of 25 cm in a machine direction (MD) and 2.5 cm in a crosswise direction (CD) are sampled in the case in which strength in a machine direction (MD) is measured, and three non-woven fabric test pieces of 25 cm in a crosswise direction (CD) and 2. 5 cm in a machine direction (MD) are sampled in the case in which strength in a crosswise direction (CD) is measured. A tensile test is carried out by using a tensile testing machine (Instron 5564 manufactured by Instron Japan Company Limited) under the conditions of a chuck interval of 200 mm and a tensile rate of 200 mm/min. A tensile load is measured for the three test pieces, and an average value of the maximum values thereof is set to a tensile strength.

(5) Lint-free property

In a thermostatic chamber of a temperature of $20\pm2°C$ and a humidity of $65\pm2\%$ conforming to JIS Z 8703 (a standard state of a test place), three non-woven fabric test pieces of 11 cm in a machine direction (MD) and 4 cm in a crosswise direction (CD) are sampled in the case in which strength in a machine direction (MD) is measured, and three non-woven fabric test pieces of 11 cm in a crosswise direction (CD) and 4 cm in a machine direction (MD) are sampled in the case in which strength in a crosswise direction (CD) is measured.

A pressure-sensitive adhesive double coated tape (ST-416P manufactured by Sumitomo 3M Limited) is then bonded to a non-measured face of a non-woven fabric test piece that has been sampled. The pressure-sensitive adhesive double coated tape is then peeled, and the non-woven fabric test piece is bonded to a measuring plate. To fix the test piece, a weight (size: 5 × 15 × 3.8 cm, weight: 2200 g) is placed at rest on the test piece for 20 seconds. The weight is removed 20 seconds later, and a sand paper (Metalite K-224-505) is attached to a friction part on the measuring plate. In the state in which the test piece and the friction part are in contact with each other under the constant load (a load value: 0.91 kg), a reciprocating motion is repeated 20 times at a constant rate (42 reciprocating motions/min) in a longer direction of the test piece.

After the reciprocating motions of 20 times, the friction part is removed, and a single coated tape (Scotch mark, surface protection tape, manufactured by Sumitomo 3M Limited) cut to a size of 4 cm × 11 cm in advance of which a weight (pre weight) has been measured is bonded to the test piece, and a weight (size: 5 × 15 × 3.8 cm, weight: 2200 g) is placed at rest on the test piece for 20 seconds.

The weight is removed 20 seconds later, and the tape is removed from the non-woven fabric. A weight (post weight) of the tape to which dropout fibers have adhered is measured, and an amount of dropout fibers is obtained by the following expression.

$$\texttt{Amount of dropout fibers (mg/cm}^2\texttt{) = (Post weight - Pre weight)} \times \texttt{1000} \div \texttt{44}$$

The both surfaces (a front surface and a back surface) of the non-woven fabric are evaluated to obtain an amount of dropout fibers. It is judged that the less an amount of dropout fibers is, the more satisfactory a lint-free property of the non-woven fabric is.

(6) Bulkiness

One non-woven fabric test piece of 10 cm in a machine direction (MD) and of 10 cm in a crosswise direction (CD) is sampled in a thermostatic chamber of a temperature of 20±2°C and a humidity of 65±2% conforming to JIS Z 8703 (a standard state of a test place) according to JIS L1906 (6.5). While a point jig of $\phi$1.6 cm is pressed to the five points of the test piece under the conditions of a constant time (10 seconds) and a constant pressure (20 g) by using the thickness gauge (manufactured by TESTER SANGYO CO., LTD.), a thickness ($\mu$m) is measured, and an average value thereof is set to bulkiness.

It is judged that the larger a thickness is, the more satisfactory bulkiness of the non-woven fabric is.

[Example 1]

<Production of a splittable conjugated continuous fiber non-woven fabric>

A poly L lactic acid based polymer in which a weight average molecular weight Mw is 117000 and MFR (a load of 2160 g, 190°C) is 47 g / 10 minutes (manufactured by Mitsui Chemicals, Inc., commercial product name: LACEA H-900, L-lactic acid / D-lactic acid (a copolymer ratio) = 98.5/1.5 mol%, a melting point (Tme) : 165°C) was prepared as polyester (A). In addition, a propylene ·ethylene random copolymer in which MFR (a load of 2160 g, 230°C) is 60 g / 10 minutes (Mw/Mn = 2.4, a melting point (Tmo): 143°C, an ethylene content: 4 mol%) was prepared as polyolefin (B) . Separate extruders (30 mm $\phi$) were then prepared for the polyester (A) and the polyolefin (B). A molding temperature for a poly L lactic acid based polymer was set to 190°C, and a molding temperature for a propylene-ethylene random copolymer was set to 200°C. The poly L lactic acid based polymer and the propylene· ethylene random copolymer were then molten. A continuous fiber was then carried out for a splittable conjugated continuous fiber in which a weight ratio of the polyester (A) and the polyolefin (B) was 50 / 50 by using a non-woven fabric production apparatus as shown in Fig. 3 (a spunbond forming machine, a length in a direction perpendicular to a flow direction of the machine on a collection face: 100 mm). The splittable conjugated continuous fiber to which a continuous fiber was carried out was cooled by an air (25°C) and stretched at a spinning speed of 2500 m/min. The splittable conjugated continuous fiber was then deposited on a collection belt, and a splittable conjugated continuous fiber non-woven fabric in which a weight (a mass per unit area) was 25 g/m² was produced. The non-woven fabric production apparatus was provided with a spinneret for a spinning of a splittable conjugated fiber having a cross sectional shape as shown in Fig. 1(a) in which the number of total segments was 16.

<Production of a crimped continuous fibered non-woven fabric>

A propylene polymer in which MFR (a load of 2160 g, 230°C) is 60 g / 10 minutes was prepared as polyolefin (A) . In addition, a propylene-ethylene random copolymer in which MFR (a load of 2160 g, 230°C) is 60 g / 10 minutes (Mw/Mn = 2.4, a melting point (Tmo) : 143°C, an ethylene content: 4 mol%) was prepared as polyolefin (B). The polyolefin (A) and the polyolefin (B) were then molten by separate extruders at a molding temperature set to 200 °C. A continuous fiber was then carried out for a crimped conjugated continuous fiber in which a weight ratio of the polyolefin (A) and the polyolefin (B) was 20 / 80 by using a non-woven fabric production apparatus as shown in Fig. 3 (a spunbond forming machine, a length in a direction perpendicular to a flow direction of the machine on a collection face: 100 mm). The crimped conjugated continuous fiber to which a continuous fiber was carried out was cooled by an air (25°C) and stretched at a spinning speed of 2500 m/min. The crimped conjugated continuous fiber was then deposited on a collection belt, and a crimped continuous fiber non-woven fabric in which a weight (a mass per unit area) was 25 g/m$^2$ was produced. The non-woven fabric production apparatus was provided with a spinneret for a spinning of a splittable conjugated fiber having a cross sectional shape as shown in Fig. 2 (a) in which the number of total segments was 16.

<Production of a mixed continuous fiber non-woven fabric>

The splittable conjugated continuous fiber non-woven fabric and the crimped continuous fiber non-woven fabric were laminated to each other. A water jet processing was carried out to a front surface and a back surface of the laminated non-woven fabric three times, respectively, by using a nozzle of $\phi$ 0.11 mm under the conditions in which a distance from the nozzle to the laminated non-woven fabric is 10 cm and a line speed is 15 m/min. The splittable conjugated continuous fiber non-woven fabric was split to two components to be split continuous fibers. The split continuous fibers and crimped continuous fiber were mixed, and a mixed continuous fiber non-woven fabric in which a weight (a mass per unit area) was 50 g/m$^2$ was produced. Each physical property of the obtained mixed continuous fiber non-woven fabric was measured by the above-described methods. The measurement results are listed in Table 1.

[Example 2]

<Production of a mixed continuous fiber non-woven fabric>

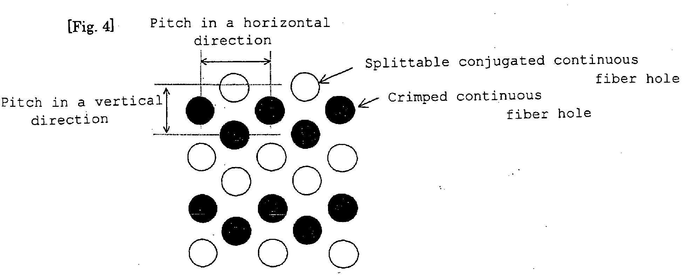

A poly L lactic acid based polymer in which a weight average molecular weight Mw is 117000 and MFR (a load of 2160 g, 190°C) is 47 g / 10 minutes (manufactured by Mitsui Chemicals, Inc., commercial product name: LACEA H-900, L-lactic acid / D-lactic acid (a copolymer ratio) = 98.5/1.5 mol%, a melting point (Tme) : 165°C) was prepared as polyester (A). In addition, a propylene ethylene random copolymer in which MFR (a load of 2160 g, 230°C) is 60 g / 10 minutes (MW/Mn = 2.4, a melting point (Tmo) : 143°C, an ethylene content: 4 mol%) was prepared as polyolefin (B). Separate extruders (30 mm $\phi$) were then prepared for the polyester (A) and the polyolefin (B). A molding temperature for a poly L lactic acid based polymer was set to 190°C, and a molding temperature for a propylene-ethylene random copolymer was set to 200°C. The poly L lactic acid based polymer and the propylene· ethylene random copolymer were then molten. A melt spinning was carried out by using a non-woven fabric production apparatus as shown in Fig. 3 (a spunbond forming machine, a length in a direction perpendicular to a flow direction of the machine on a collection face: 100 mm) based on a spunbonding method under the conditions of a resin temperature and a die temperature of both 200°C, a temperature of a cooling air of 25°C, and a wind velocity of a stretching air of 2000 m/min. A web made of mixed fibers including a splittable conjugated continuous fiber non-woven fabric comprising the polyester (A) and the polyolefin (B) and a crimped continuous fiber comprising the polyester (A) and the polyolefin (B) was then prepared in such a manner that a weight ratio of the splittable conjugated continuous fiber non-woven fabric and the crimped continuous fiber was 50% by weight: 50% by weight. The web was then deposited on a collection face. The non-woven fabric production apparatus was provided with a spinneret resulting in a fiber cross sectional shape as shown in Fig. 1(a) and Fig. 2(a) in a nozzle arrangement pattern as shown in Fig. 4.

As described above, in Example 2, different resins of two kinds was used to produce a mixed continuous fiber non-woven fabric by using a non-woven fabric production apparatus as shown in Fig. 3 that enables a simultaneous spinning of the resins of two kinds. The non-woven fabric production apparatus as shown in Fig. 3 was provided with a nozzle as shown in Fig. 4.

The spinneret was provided with the nozzle arrangement pattern as shown in Fig. 4. A nozzle pitch was 8 mm in a vertical direction and 9 mm in a horizontal direction. A ratio of the number of nozzles was a splittable conjugated continuous fiber nozzle: a crimped continuous fiber nozzle = 1 : 1. A single-hole discharge rate of a splittable conjugated continuous fiber was 0.6 g/(min· hole), and a single-hole discharge rate of a crimped continuous fiber was 0.6 g/(min·hole). A weight ratio of the polyester (A) and the polyolefin (B) for the splittable conjugated continuous fiber was adjusted to be 50 / 50. Moreover, a weight ratio of the polyester (A) and the polyolefin (B) for the crimped continuous fiber was adjusted to be 20 / 80.

A water jet processing was carried out to a front surface and a back surface of the mixed continuous fiber non-woven fabric that was obtained as described above three times, respectively. The splittable conjugated continuous fiber was split to two components to be split continuous fibers. The split continuous fiber and crimped continuous fiber were mixed, and a mixed continuous fiber non-woven fabric in which a weight (a mass per unit area) was 50 g/m$^2$ was produced. The conditions of the water jet processing were that a diameter of a nozzle was $\phi$ 0.11 mm, a distance from the nozzle to the deposited non-woven fabric was 10 cm, and a line speed was 15 m/min. Each physical property of the obtained mixed continuous fiber non-woven fabric was measured by the above-described methods. The measurement results are listed in Table 1.

[Comparative example 1]

<Production of a splittable conjugated continuous fiber non-woven fabric>

A poly L lactic acid based polymer in which a weight average molecular weight Mw is 117000 and MFR (a load of 2160 g, 190°C) is 47 g / 10 minutes (manufactured by Mitsui Chemicals, Inc., commercial product name: LACEA H-900, L-lactic acid / D-lactic acid (a copolymer ratio) = 98.5/1.5 mol%, a melting point (Tme): 165°C) was prepared as polyester (A). In addition, a propylene ·ethylene random copolymer in which MFR (a load of 2160 g, 230°C) is 60 g / 10 minutes (Mw/Mn = 2.4, a melting point (Tmo) : 143°C, an ethylene content: 4 mol%) was prepared as polyolefin (B). Separate extruders (30 mm $\phi$) were then prepared for the polyester (A) and the polyolefin (B). A molding temperature for a poly L lactic acid based polymer was set to 190°C, and a molding temperature for a propylene-ethylene random copolymer was set to 200°C. The poly L lactic acid based polymer and the propylene· ethylene random copolymer were then molten. A continuous fiber was then carried out for a splittable conjugated continuous fiber in which a weight ratio of the polyester (A) and the polyolefin (B) was 50 / 50 by using a non-woven fabric production apparatus as shown in Fig. 3 (a spunbond forming machine, a length in a direction perpendicular to a flow direction of the machine on a collection face: 100 mm). The splittable conjugated continuous fiber to which a continuous fiber was carried out was cooled by an air (25°C) and stretched at a spinning speed of 2500 m/min. The splittable conjugated continuous fiber was then deposited on a collection belt, and a splittable conjugated continuous fiber non-woven fabric was produced. The non-woven fabric production apparatus was provided with a spinneret for a spinning of a splittable conjugated fiber having a cross sectional shape as shown in Fig. 1(a) in which the number of total segments was 16.

<Production of a split continuous fiber non-woven fabric>

A water jet processing was carried out to a front surface and a back surface of the splittable conjugated continuous fiber non-woven fabric three times, respectively. The splittable conjugated continuous fiber was split to two components, and a split continuous fiber non-woven fabric in which a weight (a mass per unit area) was 50 g/m$^2$ was produced. The conditions of the water jet processing were that a diameter of a nozzle was $\phi$ 0.11 mm, a distance from the nozzle to the deposited non-woven fabric was 10 cm, and a line speed was 15 m/min. Each physical property of the obtained split continuous fiber non-woven fabric was measured by the above-described methods. The measurement results are listed in Table 1.

[Comparative example 2]

<Production of a crimped continuous fiber non-woven fabric>

A propylene polymer in which MFR (a load of 2160 g, 230°C) is 60 g / 10 minutes was prepared as polyolefin (A). In addition, a propylene-ethylene random copolymer in which MFR (a load of 2160 g, 230°C) is 60 g / 10 minutes (Mw/Mn = 2.4, a melting point (Tmo) : 143°C, an ethylene content: 4 mol%) was prepared as polyolefin (B). Separate extruders (30 mm $\phi$) were then prepared for the polyolefin (A) and the polyolefin (B). The polyolefin (A) and the polyolefin (B) were then molten by separate extruders at a molding temperature set to 200°C. A continuous fiber was then carried out for a crimped conjugated continuous fiber in which a weight ratio of the polyolefin (A) and the polyolefin (B) was 20 / 80 at a spinning speed of 2500 m/min by using a non-woven fabric production apparatus as shown in Fig. 3 (a spunbond forming machine, a length in a direction perpendicular to a flow direction of the machine on a collection face: 100 mm) . The crimped conjugated continuous fiber to which a continuous fiber was carried out was cooled by an air (25°C) and stretched at a spinning speed of 2500 m/min. The crimped conjugated continuous fiber was then deposited on a collection belt, and a crimped continuous fiber non-woven fabric in which a weight (a mass per unit area) was 25 g/m$^2$ was produced. The non-woven fabric production apparatus was provided with a spinneret for a spinning of a crimped conjugated fiber having a cross sectional shape as shown in Fig. 2(a) in which the number of total segments was 2.

A water jet processing was carried out to a front surface and a back surface of the crimped continuous fiber non-woven fabric three times, respectively. A crimped continuous fiber non-woven fabric in which a weight (a mass per unit area) was 50 g/m² was produced. The conditions of the water jet processing were that a diameter of a nozzle was $\phi$ 0.11 mm, a distance from the nozzle to the deposited non-woven fabric was 10 cm, and a line speed was 15 m/min. Each physical property of the obtained crimped continuous fiber non-woven fabric was measured by the above-described methods. The measurement results are listed in Table 1.

[Table 1]

| | | Example 1 | Example 2 | Comparative Example 1 | Comparative Example 2 |
|---|---|---|---|---|---|
| Total mass per unit area [g/m²] | | 50 | 50 | 50 | 50 |
| WJ pressure [kgf/cm²] | First stage, front surface | 20 | 20 | 20 | 20 |
| | Second stage, front surface | 30 | 30 | 30 | 30 |
| | Third stage, front surface | 40 | 40 | 40 | 40 |
| | Fourth Stage, back surface | 50 | 50 | 50 | 50 |
| | Fifth stage, back surface | 60 | 60 | 60 | 60 |
| | Sixth stage, back surface | 100 | 100 | 100 | 100 |
| Lint-free property [mg/cm²] | Front surface MD | 0.037 | 0.040 | 0.113 | Measurement disabled |
| | CD | 0.037 | 0.027 | 0.193 | Measurement disabled |
| | Back surface MD | 0.037 | 0.030 | 0.093 | Measurement disabled |
| | CD | 0.067 | 0.030 | 0.243 | Measurement disabled |
| Flexibility | MD [mm/25 mm] | 31 | 55 | 60 | 33 |
| | CD [mm/25 mm] | 22 | 42 | 32 | 23 |
| Thickness [μm] | | 414 | 385 | 316 | 432 |
| Maximum load | MD | 3.6 | 3.1 | 4.3 | 2.8 |
| | CD | 1.6 | 3.5 | 2.6 | 0.6 |
| Maximum stretch | MD [%] | 81 | 48 | 81 | 129 |
| | CD [%] | 119 | 49 | 88 | 222 |

* In an evaluation of a lint-free property for Comparative Example 2, an adhesion amount of fibers to a tape was too large to measure a lint-free-property.

## INDUSTRIAL APPLICABILITY

A mixed continuous fiber non-woven fabric in accordance with the present invention does not practically cause fibers to drop out even in the case in which the mixed continuous fiber non-woven fabric is used for an application such as clothing items and a wiping cloth in which a surface of a non-woven fabric is rubbed. Consequently, a mixed composite fiber non-woven fabric in accordance with the present invention can be suitably used for a wiping cloth. Moreover, since the mixed continuous fiber non-woven fabric is excellent in flexibility and feeling, the mixed continuous fiber non-woven fabric can be widely used as a surface material of a medical gown, an operating gown, a packaging cloth, and a sanitary material such as a disposable diaper and a sanitary napkin, bedclothes such as a bed sheet and a pillow case, a carpet, and a base fabric for a synthetic leather.

**Claims**

1. A mixed continuous fiber non-woven fabric comprising a split continuous fiber and a crimped continuous fiber that does not have a split property.

2. The mixed continuous fiber non-woven fabric as defined in claim 1, wherein a total amount of the crimped continuous fiber that does not have a split property is in the range of 10 to 90% by weight (where a total weight of a split continuous fiber and a crimped continuous fiber is 100% by weight).

3. The mixed continuous fiber non-woven fabric as defined in claim 1 or 2, wherein the split continuous fiber comprises a polyester continuous fiber and an olefin polymer continuous fiber.

4. The mixed continuous fiber non-woven fabric as defined in claim 3, wherein the polyester continuous fiber is an aliphatic polyester continuous fiber.

5. The mixed continuous fiber non-woven fabric as defined in claim 4, wherein the aliphatic polyester continuous fiber is a polylactic acid continuous fiber.

6. The mixed continuous fiber non-woven fabric as defined in claim 3, wherein the olefin polymer continuous fiber is a propylene·$\alpha$-olefin random copolymer continuous fiber.

7. The mixed continuous fiber non-woven fabric as defined in claim 1, wherein the crimped continuous fiber is an eccentric core-in-sheath crimped continuous fiber or a parallel type crimped continuous fiber.

8. The mixed continuous fiber non-woven fabric as defined in any one of claims 1, 2, and 7, wherein the crimped continuous fiber comprises an olefin polymer.

9. The mixed continuous fiber non-woven fabric as defined in claim 8, wherein the olefin polymer is a propylene-based polymer.

10. The mixed continuous fiber non-woven fabric as defined in any one of claims 1, 2, 7, and 8, wherein the crimped continuous fiber comprises two components of a propylene homopolymer and a propylene·$\alpha$-olefin random copolymer.

11. A wiping cloth comprising the mixed continuous fiber non-woven fabric as defined in any one of claims 1 to 10.

12. A non-woven fabric laminate comprising the mixed continuous fiber non-woven fabric as defined in any one of claims 1 to 10.

13. A method for producing the mixed continuous fiber non-woven fabric according to claim 1, comprising the steps of laminating a split continuous fiber non-woven fabric and a non-woven fabric of a crimped continuous fiber that does not have a split property, applying a high pressure liquid flow to the laminate, and mixing a split continuous fiber and a crimped continuous fiber that does not have a split property.

14. A method for producing the mixed continuous fiber non-woven fabric according to claim 1, comprising the steps of laminating a splittable conjugated continuous fiber non-woven fabric and a non-woven fabric of a crimped continuous fiber that does not have a split property, applying a high pressure liquid flow to the laminate, splitting a splittable conjugated continuous fiber, and mixing a split continuous fiber and a crimped continuous fiber that does not have a split property.

15. A method for producing the mixed continuous fiber non-woven fabric according to claim 1, comprising the steps of discharging a splittable conjugated continuous fiber and a crimped continuous fiber that does not have a split property from a spinneret provided with a spinning nozzle for a mixed fiber, cooling a mixed continuous fiber made of the splittable conjugated continuous fiber and the crimped continuous fiber that does not have a split property to which a spinning has been carried out by a cooling fluid, applying a tension to the mixed continuous fiber by a fluid to thin the mixed continuous fiber, depositing the mixed continuous fibers on a collection belt to obtain a non-woven fabric, and splitting the splittable conjugated continuous fiber by applying a high pressure liquid flow to the non-woven fabric.

**Patentansprüche**

1. Endlosfasermischvlies, umfassend eine Endlos-Spaltfaser und eine gekräuselte Endlosfaser, die keine Spaltungseigenschaft aufweist.

2. Endlosfasermischvlies gemäß Anspruch 1, wobei eine Gesamtmenge der gekräuselten Endlosfaser, die keine Spaltungseigenschaft aufweist, im Bereich von 10 bis 90 Gew.-% liegt (wobei das Gesamtgewicht von einer Endlos-Spaltfaser und einer gekräuselten Endlosfaser 100 Gew.-% beträgt).

3. Endlosfasermischvlies gemäß Anspruch 1 oder 2, wobei die Endlos-Spaltfaser eine Endlosfaser aus Polyester und eine Endlosfaser aus Olefinpolymer umfasst.

4. Endlosfasermischvlies gemäß Anspruch 3, wobei die Endlosfaser aus Polyester eine Endlosfaser aus aliphatischem Polyester ist.

5. Endlosfasermischvlies gemäß Anspruch 4, wobei die Endlosfaser aus aliphatischem Polyester eine Endlosfaser aus Polymilchsäure ist.

6. Endlosfasermischvlies gemäß Anspruch 3, wobei die Endlosfaser aus Olefinpolymer eine Endlosfaser aus statistischem Propylen·$\alpha$-Olefin-Copolymer ist.

7. Endlosfasermischvlies gemäß Anspruch 1, wobei die gekräuselte Endlosfaser eine gekräuselte exzentrische Kern-in-Hülle-Endlosfaser oder eine gekräuselte Endlosfaser vom Parallel-Typ ist.

8. Endlosfasermischvlies gemäß einem der Ansprüche 1, 2 und 7, wobei die gekräuselte Endlosfaser ein Olefinpolymer umfasst.

9. Endlosfasermischvlies gemäß Anspruch 8, wobei das Olefinpolymer ein Propylen-basiertes Polymer ist.

10. Endlosfasermischvlies gemäß einem der Ansprüche 1, 2, 7 und 8, wobei die gekräuselte Endlosfaser zwei Komponenten eines Propylenhomopolymers und eines statistischen Propylen·$\alpha$-Olefin-Copolymers umfasst.

11. Wischtuch, umfassend das Endlosfasermischvlies gemäß einem der Ansprüche 1 bis 10.

12. Vliesstofflaminat, umfassend das Endlosfasermischvlies gemäß einem der Ansprüche 1 bis 10.

13. Verfahren zur Herstellung des Endlosfasermischvlieses gemäß Anspruch 1, umfassend die Schritte des Laminierens eines Vlieses einer Endlos-Spaltfaser und eines Vlieses einer gekräuselten Endlosfaser, die keine Spaltungseigenschaft aufweist, des Anwendens eines Hochdruckflüssigkeitsstroms auf das Laminat und des Mischens einer Endlos-Spaltfaser und einer gekräuselten Endlosfaser, die keine Spaltungseigenschaft aufweist.

14. Verfahren zur Herstellung des Endlosfasermischvlieses gemäß Anspruch 1, umfassend die Schritte des Laminierens eines Vlieses einer spaltbaren konjugierten Endlosfaser und eines Vlieses einer gekräuselten Endlosfaser, die keine Spaltungseigenschaft aufweist, des Anwendens eines Hochdruckflüssigkeitsstroms auf das Laminat, des Spaltens einer spaltbaren konjugierten Endlosfaser und des Mischens einer Endlos-Spaltfaser und einer gekräuselten Endlosfaser, die keine Spaltungseigenschaft aufweist.

15. Verfahren zur Herstellung des Endlosfasermischvlieses gemäß Anspruch 1, umfassend die Schritte des Ausgebens einer spaltbaren konjugierten Endlosfaser und einer gekräuselten Endlosfaser, die keine Spaltungseigenschaft aufweist, aus einem Spinngerät, das mit einer Spinndüse für Mischfasern versehen ist, des Kühlens der gemischten Endlosfasern aus der spaltbaren konjugierten Endlosfaser und der gekräuselten Endlosfaser, die keine Spaltungseigenschaft aufweist, wobei ein Spinnen mit einem Kühlfluid durchgeführt worden ist, des Anlegens einer Zugspannung an die gemischten Endlosfasern durch ein Fluid, um die gemischten Endlosfasern zu dünner zu machen, des Abscheidens der gemischten Endlosfasern auf einem Sammelband, um ein Vlies zu erhalten, und des Aufspaltens der spaltbaren konjugierten Endlosfaser durch Anwenden eines Hochdruckflüssigkeitsstroms auf das Vlies.

**Revendications**

1. Tissu non tissé à fibres continues mélangées comprenant une fibre continue séparée et une fibre continue frisée qui n'a pas de propriété de séparation.

2. Tissu non tissé à fibres continues mélangées selon la revendication 1, dans lequel une quantité totale de la fibre continue frisée qui n'a pas de propriété de séparation est dans la plage de 10 à 90% en poids (où un poids total d'une fibre continue séparée et une fibre continue frisée représente 100 % en poids).

3. Tissu non tissé à fibres continues mélangées selon la revendication 1 ou 2, dans lequel la fibre continue séparée comprend une fibre continue de polyester et une fibre continue de polymère oléfine.

4. Tissu non tissé à fibres continues mélangées selon la revendication 3, dans lequel la fibre continue de polyester est une fibre continue de polyester aliphatique.

5. Tissu non tissé à fibres continues mélangées selon la revendication 4, dans lequel la fibre continue de polyester aliphatique est une fibre continue d'acide polylactique.

6. Tissu non tissé à fibres continues mélangées selon la revendication 3, dans lequel la fibre continue de polymère oléfine est une fibre continue de copolymère statistique de propylène-$\alpha$-oléfine.

7. Tissu non tissé à fibres continues mélangées selon la revendication 1, dans lequel la fibre continue frisée est une fibre continue frisée de type âme dans gaine excentrique ou une fibre continue frisée de type parallèle.

8. Tissu non tissé à fibres continues mélangées selon l'une quelconque des revendications 1, 2 et 7, dans lequel la fibre continue frisée comprend un polymère oléfine.

9. Tissu non tissé à fibres continues mélangées selon la revendication 8, dans lequel le polymère oléfine est un polymère à base de propylène.

10. Tissu non tissé à fibres continues mélangées selon l'une quelconque des revendications 1, 2, 7 et 8, dans lequel la fibre continue frisée comprend deux composants d'un homopolymère de propylène et d'un copolymère statistique de propylène-$\alpha$-oléfine.

11. Torchon comprenant le tissu non-tissé à fibres continues mélangées selon l'une quelconque des revendications 1 à 10.

12. Stratifié de tissu non tissé comprenant le tissu non tissé à fibres continues mélangées selon l'une quelconque des revendications 1 à 10.

13. Procédé de production du tissu non tissé à fibres continues mélangées selon la revendication 1, comprenant les étapes consistant à stratifier un tissu non tissé à fibre continue séparée et un tissu non tissé d'une fibre continue frisée qui n'a pas de propriété de séparation, appliquer un écoulement liquide à haute pression sur le stratifié, et mélanger une fibre continue séparée et une fibre continue frisée qui n'a pas de propriété de séparation.

14. Procédé de production du tissu non tissé à fibres continues mélangées selon la revendication 1, comprenant les étapes consistant à stratifier un tissu non tissé à fibre continue conjuguée pouvant être séparée et un tissu non tissé d'une fibre continue frisée qui n'a pas de propriété de séparation, appliquer un écoulement liquide à haute pression sur le stratifié, séparer une fibre continue conjuguée pouvant être séparée, et mélanger une fibre continue séparée et une fibre continue frisée qui n'a pas de propriété de séparation.

15. Procédé de production du tissu non-tissé à fibres continues mélangées selon la revendication 1, comprenant les étapes consistant à décharger une fibre continue conjuguée pouvant être séparée et une fibre continue frisée qui ne possède pas de propriété de séparation à partir d'une filière munie d'une buse de filage pour une fibre mélangée, refroidir une fibre continue mélangée constituée de la fibre continue conjuguée pouvant être séparée et de la fibre continue frisée qui n'a pas de propriété de séparation pour laquelle un filage a été effectué par un fluide de refroidissement, appliquer une tension à la fibre continue mélangée par un fluide pour amincir la fibre continue mélangée, déposer les fibres continues mélangées sur une courroie collectrice pour obtenir un tissu non tissé, et séparer la fibre continue conjuguée pouvant être séparée en appliquant un écoulement liquide à haute pression au tissu non tissé.

[Fig. 1]

(a)                  (b)                 (c)

(d)             (e)

[Fig. 2]

(a)                  (b)                 (c)

[Fig. 3]

[Fig. 4]

Pitch in a horizontal
direction

Splittable conjugated continuous
fiber hole

Pitch in a vertical
direction

Crimped continuous
fiber hole

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014458 A
- JP 7049619 A
- WO 2005042824 A
- JP 2004330007 A
- JP 3113124 B
- US 20020168912 A
- WO 2006001739 A
- US 5965468 A
- WO 0231250 A2
- US 2003091822 A1
- JP 2002302861 A